# EUROPEAN PATENT APPLICATION

(11) **EP 4 797 612 A1**
(43) Date of publication of application: **26.08.2026**
(21) Application number: 23956407.3
(22) Date of filing: 25.10.2023
(51) Int. Cl.: H04L 9/40

(54) **DEVICE INTERCONNECTION METHOD AND APPARATUS**

(71) Applicant: HUAWEI TECHNOLOGIES CO., LTD., Shenzhen 518129 (CN)
(72) Inventor: WANG, Wei, Shenzhen, Guangdong 518129 (CN); LENG, Yongqiang, Shenzhen, Guangdong 518129 (CN); LUO, Pengfei, Shenzhen, Guangdong 518129 (CN); ZHANG, Junping, Shenzhen, Guangdong 518129 (CN); ZHANG, Jianan, Shenzhen, Guangdong 518129 (CN); ZHAO, Rongjian, Shenzhen, Guangdong 518129 (CN)
(74) Representative: Epping - Hermann - Fischer
(86) International application number: PCT/CN2023/126517
(87) International publication number: WO 2025/086155

(57) **Abstract**

This application provides a device interconnection method and an apparatus. The method includes: A first device concurrently generates a first layer and a second layer, where the first layer is a background layer, N pixels are selected from the second layer, and authentication information used for authentication and connection between the first device and a second device is modulated on the N pixels by using a carrier; and the first device generates a third layer based on the first layer and the second layer, and displays the third layer on a screen. According to the method in embodiments of this application, not only pixel-level signal transmission can be implemented, but also the first device may concurrently generate a plurality of layers, so that interaction time of device connection can be reduced, and user experience can be improved.

## Description

### TECHNICAL FIELD

This application relates to the field of communication technologies, and more specifically, to a device interconnection method and an apparatus.

### BACKGROUND

When devices are paired for the first time, a two-dimensional code scanning manner is generally used to implement authentication and connection between the devices. However, a current two-dimensional code authentication and connection process is a serial process, and each step in the authentication process needs to be triggered accordingly, and interaction time is long.

### SUMMARY

This application provides a device connection method and an apparatus, to reduce interaction time of device connection and improve user experience.

According to a first aspect, a device connection method is provided. The method may be performed by a first device, or may be performed by a module (for example, a chip or a circuit) in the first device, or may be performed by a logical node, a logical module, or software that can implement all or some functions of the first device. This is not limited in this application.

The method includes: A first device concurrently generates a first layer and a second layer, where the first layer is a background layer, the second layer includes N pixels, first information is modulated on the N pixels, and the first information is used for authentication and connection between the first device and a second device; the first device generates a third layer based on the first layer and the second layer; and the first device displays the third layer on a screen.

According to the foregoing method, not only pixel-level signal transmission can be implemented, but also the first device may concurrently generate a plurality of layers, so that interaction time of device connection can be reduced, and user experience can be improved.

With reference to the first aspect, in some implementations of the first aspect, the first information includes at least two types of signals, that the first information is modulated on the N pixels includes: The first information is modulated on the N pixels by using at least two types of carriers; and the at least two types of signals are in a one-to-one correspondence with the at least two types of carriers.

For example, if the first information is encoded into a binary information sequence, the information sequence of the first information may be modulated on the N pixels by using two types of carriers. If the first information is encoded into a multi-ary information sequence, the information sequence of the first information may be modulated on the N pixels by using a plurality of types of carriers.

With reference to the first aspect, in some implementations of the first aspect, the method further includes: The first device selects P areas from the second layer; and the first device selects some or all pixels from each of the P areas, where a total of the N pixels are selected, and N is greater than P, and both N and P are positive integers.

When the first device selects all pixels from each of the P areas, it may be considered that the first device selects P pixel blocks from the second layer, and all pixels included in the P pixel blocks are the N pixels.

According to the foregoing method, pixels used to modulate a signal may be selected by area.

With reference to the first aspect, in some implementations of the first aspect, at least one pixel selected from one of the P areas is used to modulate one type of signal in the first information, and the method further includes: The first device repeatedly modulates the at least two types of signals on the pixels selected from the P areas.

According to the foregoing method, robustness of at least two types of signals for transmitting the first information can be improved, and a case in which the first information cannot be completely obtained because signals in some places on the screen of the first device are weak can be avoided.

With reference to the first aspect, in some implementations of the first aspect, a first type of signal in the at least two types of signals corresponds to a first type of carrier in the at least two types of carriers, and the method includes: The first device modulates the first type of signal on M pixels in the N pixels by using the first type of carrier, where initial phases of the first type of carrier corresponding to the M pixels are randomly distributed.

Similarly, if the first information includes two types of signals, and a second type of signal in the two types of signals corresponds to a second type of carrier in the two types of carriers, the method further includes: The first device modulates the second type of signal to pixels other than the M pixels in the N pixels by using the second type of carrier.

According to the foregoing method, randomness, aesthetic effect, and technical hiding effect of a screen image of the first device can be achieved.

With reference to the first aspect, in some implementations of the first aspect, the M pixels are located in S areas of the P areas, and the method further includes: The first device allocates an R value, a G value, and a B value of RGB color space to each of the M pixels, where a luminance indicated by an R value, a G value, and a B value of pixels selected from each of the S areas is an L value, and a maximum difference between L values of all of the S areas is less than a first threshold.

According to the foregoing method, brightness presented in different areas of a same type of carrier is kept consistent or approximately equal, so that no flickering occurs when a human eye watches the areas.

With reference to the first aspect, in some implementations of the first aspect, the method further includes: The first device selects one or more first pixels/first pixel blocks of the second layer; and the first device modulates a carrier corresponding to the one or more first pixels/first pixel blocks to a constant carrier in a process of transmitting the first information.

For example, the first device may select the one or more first pixels/first pixel blocks for an area #1 in the P areas. The one or more first pixels/first pixel blocks may be pixels/pixel blocks located in the area #1, or may be pixels/pixel blocks adjacent to the area #1. This is not limited in this application.

For example, the first device may modulate a carrier corresponding to one or more first pixels/first pixel blocks to any one type of carrier in the at least two types of carriers, or may modulate the carrier to another carrier. This is not limited in this application.

According to the foregoing method, another carrier carrying the at least two types of signals in the first information may be demodulated by using a constant carrier corresponding to the selected one or more first pixels/first pixel blocks as a reference, so that demodulation accuracy can be improved.

With reference to the first aspect, in some implementations of the first aspect, a frequency of any one type of carrier in the at least two types of carriers may be 0.

According to the foregoing method, a quantity of detection points during carrier demodulation can be reduced, and demodulation time can be shortened.

According to a second aspect, a device connection method is provided. The method may be performed by a second device, or may be performed by a module (for example, a chip or a circuit) in the second device, or may be performed by a logical node, a logical module, or software that can implement all or some functions of the second device. This is not limited in this application.

The method includes: A second device scans a screen of a first device, where a third layer is displayed on the screen, the third layer is generated based on a first layer and a second layer, the first layer and the second layer are concurrently generated, the first layer is a background layer, the second layer includes N pixels, first information is modulated on the N pixels, and the first information is used for authentication and connection between the second device and the first device; the second device obtains second information based on a scanning result; and the second device authenticates the second information and completes the connection to the first device.

According to the foregoing method, not only pixel-level signal transmission can be implemented, but also a plurality of layers can be concurrently generated, thereby reducing interaction time of device connection and improving user experience.

With reference to the second aspect, in some implementations of the second aspect, the first information includes at least two types of signals, that the first information is modulated on the N pixels includes: The first information is modulated on the N pixels by using at least two types of carriers; and the at least two types of signals are in a one-to-one correspondence with the at least two types of carriers.

For example, if the first information is encoded into a binary information sequence, the information sequence of the first information may be modulated on the N pixels by using two types of carriers. If the first information is encoded into a multi-ary information sequence, the information sequence of the first information may be modulated on the N pixels by using a plurality of types of carriers.

With reference to the second aspect, in some implementations of the second aspect, the N pixels are obtained by selecting some or all pixels from each of P areas selected from the screen of the first device, where N is greater than P, and both N and P are positive integers.

The N pixels are obtained by selecting all pixels from each of the P areas selected from the screen of the first device, and it may be considered that the first device selects P pixel blocks from the second layer, where all pixels included in the P pixel blocks are the N pixels.

According to the foregoing method, pixels used to modulate a signal may be selected by area.

With reference to the second aspect, in some implementations of the second aspect, all pixels selected from one of the P areas are used to modulate one type of signal in the first information, and when a sampling rate at which the second device scans the screen of the first device is equal to a screen refresh rate of the first device, the at least two types of signals are repeatedly modulated on the pixels selected from the P areas.

According to the foregoing method, robustness of at least two types of signals for transmitting the first information can be improved, and a case in which the first information cannot be completely obtained because signals in some places on the screen of the first device are weak can be avoided.

With reference to the second aspect, in some implementations of the second aspect, a sampling rate at which the second device scans the screen of the first device is greater than or equal to twice a screen refresh rate of the first device.

According to the foregoing method, a refresh stripe of the second device when the second device scans the first device can be reduced as much as possible, thereby improving accuracy of obtaining the second information.

With reference to the second aspect, in some implementations of the second aspect, a frequency of any one type of carrier in the at least two types of carriers may be 0.

According to the foregoing method, a quantity of detection points during carrier demodulation can be reduced, and demodulation time can be shortened.

According to a third aspect, a communication apparatus is provided. The communication apparatus includes a processor. The processor is configured to enable, by executing a computer program or instructions, or by using a logic circuit, the communication apparatus to perform the method according to any one of the first aspect and the possible implementations of the first aspect or the communication apparatus to perform the method according to any one of the second aspect and the possible implementations of the second aspect.

In a possible implementation, the communication apparatus further includes a memory, configured to store the computer program or the instructions.

In a possible implementation, the communication apparatus further includes a communication interface, configured to input and/or output a signal.

According to a fourth aspect, a communication apparatus is provided, including a logic circuit and an input/output interface. The input/output interface is configured to input and/or output a signal. The logic circuit is configured to perform the method in any one of the first aspect and the possible implementations of the first aspect, or perform the method in any one of the second aspect and the possible implementations of the second aspect.

According to a fifth aspect, a computer-readable storage medium is provided. The computer-readable storage medium stores a computer program or instructions. When the computer program or the instructions is/are run on a computer, the method in any one of the first aspect and the possible implementations of the first aspect is performed, or the method in any one of the second aspect and the possible implementations of the second aspect is performed.

According to a sixth aspect, a computer program product is provided. The computer program product includes instructions. When the instructions are run on a computer, the method in any one of the first aspect and the possible implementations of the first aspect is performed, or the method in any one of the second aspect and the possible implementations of the second aspect is performed.

According to a seventh aspect, a communication system is provided. The communication system includes the first device and the second device. The first device is configured to perform the method in any one of the first aspect and the possible implementations of the first aspect, and the second device is configured to perform the method in any one of the second aspect and the possible implementations of the second aspect.

For descriptions of beneficial effects of the third aspect to the seventh aspect, refer to the descriptions of the first aspect and the second aspect.

### BRIEF DESCRIPTION OF DRAWINGS

FIG. 1 is a diagram of an example of a device interconnection method 100 applicable to an embodiment of this application;
FIG. 2 is a schematic flowchart of a device interconnection method 200 according to an embodiment of this application;
FIG. 3 is a diagram of a type of layer according to an embodiment of this application;
FIG. 4 is a diagram of another type of layer according to an embodiment of this application;
FIG. 5 is a diagram of a first type of carrier and a second type of carrier according to this application;
FIG. 6 is a diagram of another type of waveform of a first type of carrier according to this application;
FIG. 7 is a diagram of other types of waveforms of a first type of carrier according to this application;
FIG. 8 is a block diagram of an example of a communication apparatus 800 applicable to an embodiment of this application; and
FIG. 9 is a block diagram of an example of a communication apparatus 900 applicable to an embodiment of this application.

### DESCRIPTION OF EMBODIMENTS

First, an operating system applicable to embodiments of this application is described.

Technical solutions provided in this application may be applied to various operating systems, for example, an Android (Android) operating system, an iPhone operating system (iPhone operating system, iOS), a Harmony operating system (Harmony operating system, HarmonyOS), and a Microsoft operating system (Microsoft Windows).

This application is mainly applied to an application scenario in which devices are paired for the first time. For example, when the devices are paired for the first time, a two-dimensional code scanning manner is generally used to implement authentication and connection between the devices. However, a current two-dimensional code authentication and connection process is a serial process, and each step in the authentication process needs to be triggered accordingly, and interaction time is long.

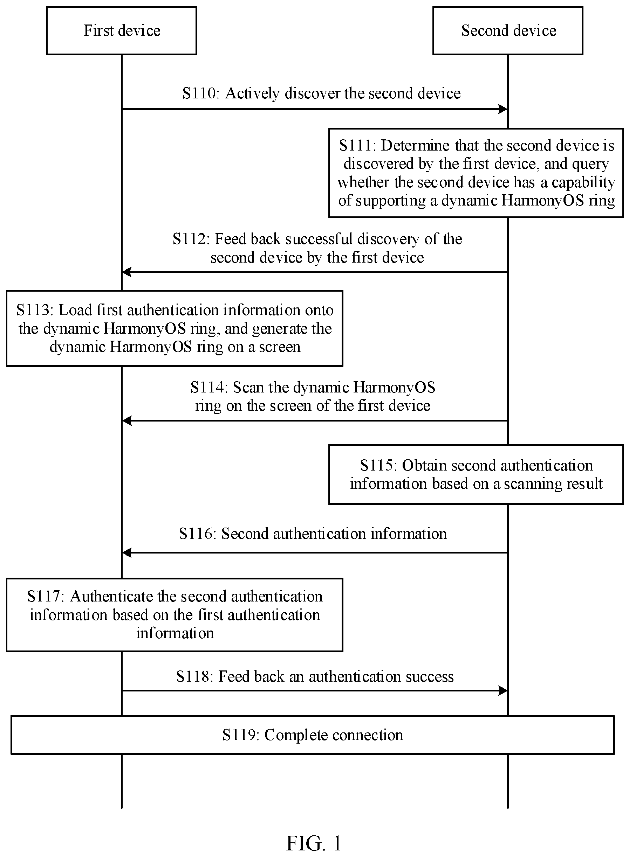

In view of this, this application provides a device interconnection method 200, to reduce interaction time during device interconnection. Before the device interconnection method 200 provided in this application is described, to facilitate understanding of the device interconnection method 200 provided in this application, this application first describes an overall interaction procedure to which the device interconnection method 200 is applicable, for example, a schematic flowchart of interaction between a first device and a second device shown in FIG. 1. An overall interaction procedure shown in FIG. 1 may be performed by the first device and the second device, or may be performed by modules and/or components (for example, chips or integrated circuits) that are installed in the first device and the second device and that have corresponding functions. This is not limited in this application.

For example, the first device may be a new mobile phone, and the second device may be an old mobile phone; or the first device may be a personal computer (personal computer, PC), and the second device may be a mobile phone or the like; or the first device may be a mobile phone, and the second device may be a watch or the like. This is not limited in this application. The overall interaction procedure includes the following steps.

Step S110: The first device actively discovers a peripheral device, for example, the first device actively discovers the second device.

Step S111: The second device determines that the second device is discovered by the first device, and queries whether the second device has a capability of supporting a dynamic HarmonyOS ring.

For example, whether the second device has the capability of supporting the dynamic HarmonyOS ring may be configured on the second device through factory setting.

Step S112: If the second device supports the dynamic HarmonyOS ring, the second device feeds back successful discovery of the second device by the first device to the first device.

Step S113: The first device loads first authentication information onto the dynamic HarmonyOS ring, and generates the dynamic HarmonyOS ring on a screen.

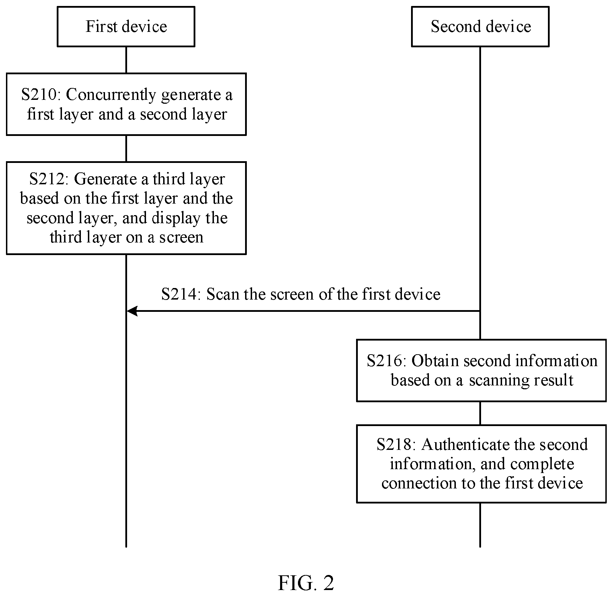

For a process of how the first device loads the first authentication information onto the dynamic HarmonyOS ring in step S113, refer to related descriptions in FIG. 2 below.

Step S114: The second device starts a camera to scan the dynamic HarmonyOS ring on the screen of the first device.

Step S115: The second device obtains second authentication information based on a scanning result.

Step S116: The second device sends the obtained second authentication information to the first device.

Step S117: The first device authenticates the second authentication information based on the first authentication information.

Specifically, the first authentication information is equivalent to the first information described below, and the second authentication information is equivalent to the second information described below. For details about the first authentication information and the second authentication information, refer to the following descriptions of the first information and second information.

Step S118: After the second authentication information is confirmed, the first device feeds back an authentication success to the second device.

Step S119: The second device completes connection to the first device.

After the first device completes the connection to the second device, the first device may execute a subsequent service procedure with the second device. This is not limited in this application.

Based on the foregoing overall interaction procedure, the device interconnection method 200 provided in this application is shown in FIG. 2. The device interconnection method 200 mainly further describes step S113, that is, how the first device loads the first authentication information on the dynamic HarmonyOS ring and how the first device generates the dynamic HarmonyOS ring. The device interconnection method 200 may be performed by the first device and the second device, or may be performed by modules and/or components (for example, chips or integrated circuits) that are installed in the first device and the second device and that have corresponding functions. This is not limited in this application. Specifically, the device interconnection method 200 provided in this application includes the following steps.

Step S210: The first device concurrently generates a first layer and a second layer.

Specifically, the first layer is a background layer, the second layer includes N pixels, the first information is modulated on the N pixels, and the first information is used for authentication and connection between the first device and the second device.

For example, the first information may be an authentication code used for authentication and connection between the first device and the second device.

For example, this application may provide the following two manners of selecting the N pixels included in the second layer:

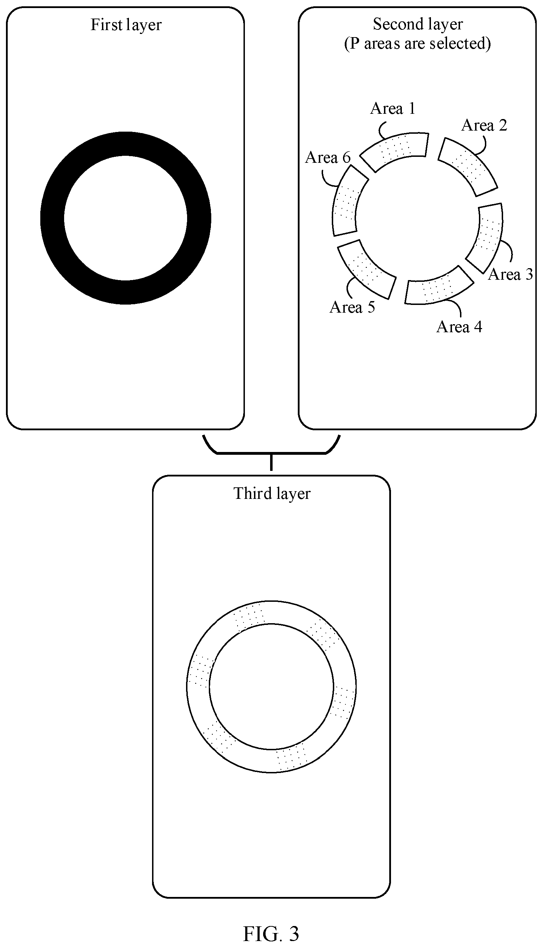

Manner 1: The first device selects P areas from the second layer, and the first device selects a plurality of pixels from each of the P areas, where a total of the N pixels are selected, N is greater than P, and both N and P are positive integers. For example, an area 1, an area 2, an area 3, an area 4, an area 5, and an area 6 of the second layer shown in FIG. 3 are the selected P areas.

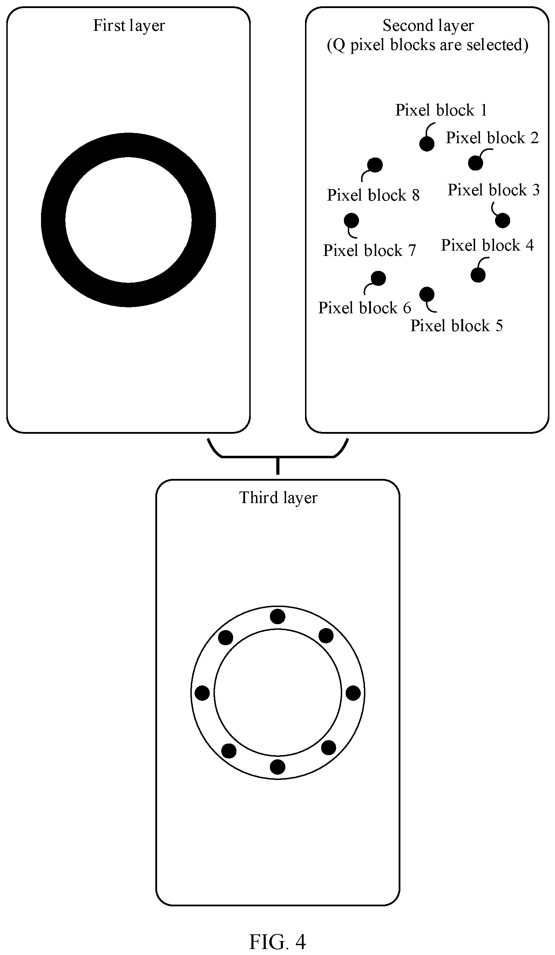

Manner 2: The first device selects Q pixel blocks from the second layer, where all pixels included in the Q pixel blocks are the N pixels, N is greater than Q, and both N and Q are positive integers. For example, a pixel block 1, a pixel block 2, a pixel block 3, a pixel block 4, a pixel block 5, a pixel block 6, a pixel block 7, and a pixel block 8 of the second layer shown in FIG. 4 are the selected Q pixel blocks.

It should be noted that, in the foregoing manner 1, when the first device selects all pixels from each of the P areas, it may be considered that the first device selects P pixel blocks, and all pixels included in the P pixel blocks are the N pixels. In this case, it may be considered that the manner 1 is the same as the manner 2. The following embodiments of this application are described in two manners: selecting the N pixels by area (the manner 1) and selecting the N pixels by pixel block (the manner 2). However, the two manners may be equivalent in some cases.

Specifically, the first information is modulated on the N pixels by using at least two types of carriers, and the modulated first information includes at least two types of signals, where the at least two types of signals are in a one-to-one correspondence with the at least two types of carriers.

For example, if information sequence of the first information is binary, the first information may be modulated on the N pixels by using the two types of carriers, and the modulated first information includes two types of signals.

Specifically, that the first device modulates the first information on the N pixels may include the following three steps:
1. The to-be-transmitted first information is converted, through a specific encoding manner, into a combination of a signal 1 and a signal 0 represented by a string of binary digits. For example, the string of binary digits may be 101. A specific form of the string of binary digits is not limited in this application.

Optionally, 2. Baseband modulation is performed on the string of binary digits to form a baseband signal.

It should be noted that an encoding manner for forming the baseband signal is not limited in this application. For example, this application may provide two encoding manners for forming the baseband signal.

### Encoding manner 1: repeated encoding.

The foregoing string of binary digits is a to-be-transmitted signal, and the string of to-be-transmitted signals is repeatedly arranged on the second layer.

For example, as shown in the second layer in FIG. 3, in the foregoing manner 1 in which the N pixels are selected, the string of binary digits 101 are respectively arranged in the area 1, the area 2, and the area 3, and then the string of binary digits 101 are respectively arranged in the area 4, the area 5, and the area 6. This manner is a centrosymmetric encoding manner. When a camera sampling rate of the second device is equal to a screen refresh rate of the first device, because a sampling direction of the camera is generally vertical and a screen refresh direction is generally row refresh, a diagonal refresh stripe is formed during camera sampling of the second device, and a signal at the refresh stripe is weak. Signal strength at the refresh stripe can be enhanced by using the centrosymmetric repetition encoding manner. Alternatively, to reduce a width of the refresh stripe, the camera sampling rate of the second device may be increased. For example, the camera sampling rate of the second device is greater than or equal to twice the screen refresh rate of the first device.

For example, as shown in the second layer in FIG. 4, in the foregoing manner 2 in which the N pixels are selected, the string of binary digits 101 are respectively arranged in the pixel block 1, the pixel block 2, and the pixel block 3, and then the string of binary digits 101 are respectively arranged in the pixel block 5, the pixel block 6, and the pixel block 7. This manner is a centrosymmetric encoding manner. When a camera sampling rate of the second device is equal to a screen refresh rate of the first device, because a sampling direction of the camera is generally vertical and a screen refresh direction is generally row refresh, a diagonal refresh stripe is formed during camera sampling of the second device, and a signal at the refresh stripe is weak. Signal strength at the refresh stripe can be enhanced in the centrosymmetric encoding manner. Alternatively, to reduce a width of the refresh stripe, the camera sampling rate of the second device may be increased. For example, the camera sampling rate of the second device is greater than or equal to twice the screen refresh rate of the first device.

### Encoding manner 2: differential encoding.

The foregoing string of binary digits is a to-be-transmitted signal, and each signal in the string of to-be-transmitted signal is encoded again into a signal 0 plus a signal 1.

For example, a digit 1 in the string of binary digits 101 is encoded again into "10", and a digit 0 is encoded again into "01". Therefore, the string of binary digits 101 may be encoded again into 100110. The re-encoded 100110 may be randomly arranged at the second layer.

For example, as shown in the second layer in FIG. 3, in the foregoing manner 1 in which the N pixels are selected, the re-encoded 100110 may be sequentially arranged in the area 1, the area 4, the area 3, the area 6, the area 2, and the area 5.

For example, as shown in the second layer in FIG. 4, in the foregoing manner 2 in which the N pixels are selected, the re-encoded 100110 may be sequentially arranged in the pixel block 1, the pixel block 4, the pixel block 8, the pixel block 5, the pixel block 3, and the pixel block 6.

In the foregoing differential encoding manner, when an amount of to-be-transmitted information is small, it can be ensured that occurrence probabilities of two symbols in binary are the same. This helps improve decoding accuracy.

3. Carrier modulation: The string of binary digits obtained in the foregoing step 1 or the string of binary digits obtained in the foregoing step 2 is modulated on the N pixels by using the two types of carriers.

For example, the string of binary digits obtained in the foregoing step 2 by using the foregoing encoding manner 1 or the foregoing encoding manner 2 represents two types of signals: the signal 1 and the signal 0.

The first device modulates the signal 1 on M pixels by using a first type of carrier, and the first device modulates the signal 0 on pixels other than the M pixels in the N pixels by using a second type of carrier.

For example, based on the example in the foregoing step 2, in the foregoing encoding manner 1 and in the foregoing manner 1 in which the N pixels are selected, the first device modulates, by using the first type of carrier, the signal 1 on the M pixels selected from the area 1, the area 3, the area 4, and the area 6; and the first device modulates, by using the second type of carrier, the signal 0 on the pixels selected from the area 2 and the area 5.

For example, based on the example in step 2, in the foregoing encoding manner 1 and in the foregoing manner 2 in which the N pixels are selected, the first device modulates, by using the first type of carrier, the signal 1 on all pixels included in the pixel block 1, the pixel block 3, the pixel block 5, and the pixel block 7; and the first device modulates, by using the second type of carrier, the signal 0 on all pixels included in the pixel block 2 and the pixel block 6.

For example, based on the example in step 2, in the foregoing encoding manner 2 and in the foregoing manner 1 in which the N pixels are selected, the first device modulates, by using the first type of carrier, the signal 1 on the M pixels selected from the area 1, the area 6, and the area 2; and the first device modulates, by using the second type of carrier, the signal 0 on the pixels selected from the area 4, the area 3, and the area 5.

For example, based on the example in step 2, in the foregoing encoding manner 2 and in the foregoing manner 2 in which the N pixels are selected, the first device modulates, by using the first type of carrier, the signal 1 on all pixels included in the pixel block 1, the pixel block 5, and the pixel block 3; and the first device modulates, by using the second type of carrier, the signal 0 on all pixels included in the pixel block 4, the pixel block 8, and the pixel block 6.

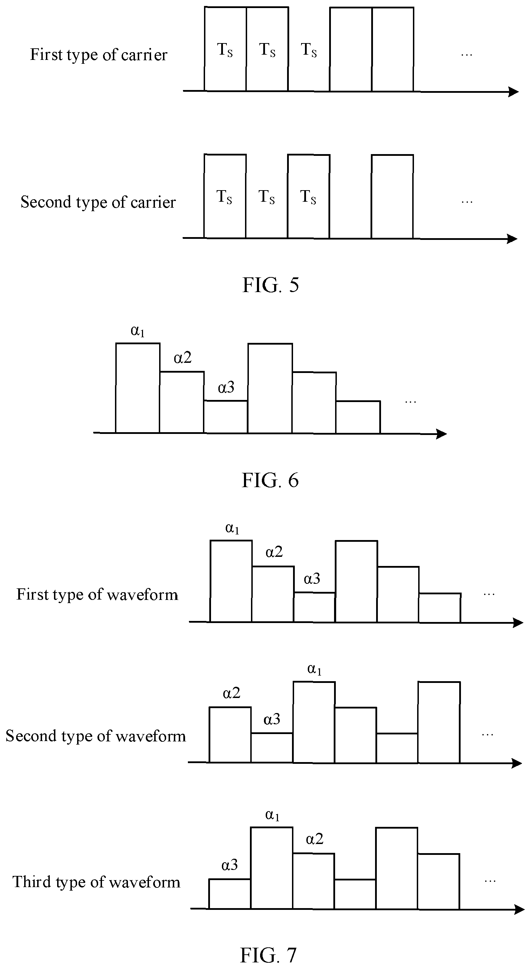

For example, if the screen refresh rate of the first device is FPS_{S}, a screen refresh period T_{S} of the first device is 1/FPS_{S}. The first type of carrier and the second type of carrier may be shown in FIG. 5. A period of the first type of carrier (carrier 1) is 3T_{S}, and therefore the first type of carrier includes a primary frequency FPS_{S}/3. A period of the second type of carrier (carrier 2) is 2T_{S}, and therefore the second type of carrier includes a primary frequency FPS_{S}/2.

In this application, a waveform of each type of carrier is not strictly limited to be a square wave, a sine wave, or the like. The first type of carrier is used as an example, and the first type of carrier may alternatively be a waveform shown in FIG. 6. In one period, the first type of carrier has three different phases: α₁, α₂, and α₃ shown in FIG. 6.

Because there are a large quantity of modulated carrier waveforms on the screen of the first device, although a human eye does not perceive a color change in a case of color mixing of pixels, it is clear that a color corresponding to one of the phases α₁, α₂, and α₃ shown in FIG. 6 is observed when a specific frame is paused after a camera is used to take a photo or record a video. To increase randomness, aesthetic, and a technical hiding effect of an image, initial phases of the first type of carrier corresponding to the M pixels are randomly distributed, as shown in FIG. 7. In FIG. 7, an initial phase of a first type of waveform is α₁, an initial phase of a second type of waveform is α₂, and an initial phase of a third type of waveform is α₃. A waveform of the first type of carrier corresponding to the M pixels may be any one of the three waveforms shown in FIG. 7. Similarly, initial phases of the second type of carrier corresponding to the pixels other than the M pixels in the N pixels may also be randomly distributed.

To avoid that the human eye observes a flicker change on the screen of the first device, this application provides a method, so that the human eye does not observe a flicker phenomenon. The method is as follows:
In the foregoing manner 1 in which the N pixels are selected, the M pixels are located in S areas of the P areas, and the first device allocates an R value, a G value, and a B value of RGB color space to each of the M pixels, where a luminance indicated by an R value, a G value, a B value of pixels selected from each of the S areas is an L value, and a maximum difference between L values of all of the S areas is less than a first threshold. For example, the first device may convert the R value, the G value, and the B value of the pixels selected from each of the S areas to CIELAB color space, to obtain an L value, an A value, and a B value of each of the S areas, where the L values of all of the S areas are approximately equal. Similarly, the pixels other than the M pixels in the N pixels are located in areas other than the S areas in the P areas. The first device allocates an R value, a G value, and a B value of RGB color space to each of the pixels other than the M pixels in the N pixels. A luminance indicated by an R value, a G value, and a B value of pixels selected from each of the areas other than the S areas in the P areas is an L value, and a maximum difference between L values of all of the areas other than the S areas in the P areas is less than a third threshold. For example, the first device converts the R value, the G value, and the B value of the pixels selected from each of the areas other than the S areas in the P areas to CIELAB color space, to obtain an L value, an A value, and a B value of each of the areas other than the S areas in the P areas, where L values of all of the areas other than the S areas in the P areas are approximately equal.

A color including the L value, the A value, and the B value of the pixels selected from each area in the CIELAB color space in the foregoing example is approximately a color that is of the pixel selected in each area and that can be observed by the human eye. L values of the pixels selected from all of areas in the CIELAB color space are approximately equal. The A value and the B value of the pixels selected from each area in the CIELAB color space may be randomly combined.

Alternatively, in the foregoing manner 2 in which the N pixels are selected, the M pixels are located in T pixel blocks of the Q pixel blocks, and the first device allocates an R value, a G value, and a B value of RGB color space to each of the M pixels, where a luminance indicated by an R value, a G value, and a B value of pixels included in each of the T pixel blocks is an L value, and a maximum difference between L values of all of the T pixel blocks is less than a second threshold. For example, the first device converts the R value, the G value, and the B value of the pixel included in each of the T pixel blocks into the CIELAB color space, to obtain an L value, an A value, and a B value of each of the T pixel blocks, where the L values of all of the pixel blocks in the T pixel blocks are approximately equal. Similarly, the pixels other than the M pixels in the N pixels are located in pixel blocks other than the T pixel blocks in the Q pixel blocks. The first device allocates an R value, a G value, and a B value of RGB color space to each of the pixels other than the M pixels in the N pixels. A luminance indicated by an R value, a G value, and a B value of pixels included in each of the pixel blocks other than the T pixel blocks in the Q pixel blocks is the L value, and a maximum difference between L values of all of the pixel blocks other than the T pixel blocks in the Q pixel blocks is less than a fourth threshold. For example, the first device converts the R value, the G value, and the B value of the pixel included in each of the pixel blocks other than the T pixel blocks in the Q pixel blocks to CIELAB color space, to obtain an L value, an A value, and a B value of each of the pixel blocks other than the T pixel blocks in the Q pixel blocks, where L values of all of the pixel blocks other than the T pixel blocks in the Q pixel blocks are approximately equal.

A color including the L value, the A value, and the B value of the pixel included in each pixel block in the CIELAB color space in the foregoing example is approximately a color that is of the pixel included in each pixel block and that can be observed by the human eye. L values of the pixels included in all of pixel blocks in the CIELAB color space are approximately equal. A values and B values of the pixels included in all of pixel block in the CIELAB color space may be randomly combined.

The first threshold, the second threshold, the third threshold, and the fourth threshold may be set according to an actual requirement. This is not limited in this application.

To improve accuracy of carrier demodulation, this application further provides a method. The method is as follows:
The first device selects one or more first pixels/first pixel blocks of the second layer, and the first device modulates, in a process of transmitting the first information, a carrier corresponding to the one or more first pixels/first pixel blocks to a constant carrier.

For example, the first device may modulate the carrier corresponding to the one or more first pixels/first pixel blocks to the first type of carrier, the second type of carrier, or any other carrier. This is not limited in this application.

Modulating the carrier corresponding to the one or more first pixels/first pixel blocks to the constant carrier helps accurately demodulate the carrier on which the first information is modulated.

Step S212: The first device generates a third layer based on the first layer and the second layer, and displays the third layer on the screen.

For example, as shown in FIG. 3, in the foregoing manner 1 in which the N pixels are selected, the first device may set transparency of the first layer and transparency of the second layer, and cover the second layer on the first layer, to display a mixed layer. The mixed layer is the third layer shown in FIG. 3.

For example, as shown in FIG. 4, in the foregoing manner 2 in which the N pixels are selected, the first device may also set transparency of the first layer and transparency of the second layer, and cover the second layer on the first layer, to display a mixed layer. The mixed layer is the third layer shown in FIG. 4.

It should be understood that the third layer shown in FIG. 3 and FIG. 4 may be the dynamic HarmonyOS ring described in FIG. 1.

It should be understood that the third layer is dynamically changing. When the screen refresh rate of the first device is 60 frames per second (frames per second, FPS), the screen of the first device is refreshed approximately every 16 milliseconds (ms). That is, playing duration of each frame of the first device is approximately 16 ms. Generally, the signal obtained after the first information is modulated by using the carrier needs to be transmitted on the screen of the first device through a plurality of frames.

Step S214: The second device scans the screen of the first device.

Step S216: The second device obtains second information based on a scanning result.

Step S218: The second device authenticates the second information and completes the connection to the first device.

Specifically, the second device sends the obtained second information to the first device for verification, to determine whether the second information is consistent with the first information. If the second information is consistent with the first information, the authentication succeeds, and the first device and the second device may complete the connection.

According to the device interconnection method 200 provided in this application, to-be-transmitted information is modulated on pixels by using different carriers, to transmit the information sequence of the authentication information s, so that pixel-level communication can be implemented. In addition, a plurality of layers used for authentication may be generated concurrently, so that time used for authentication can be reduced.

In addition, a frequency of any one type of carrier in the at least two types of carriers provided in this application may be 0. In this way, a quantity of detection points can be reduced, and detection time can be shortened.

In addition, this application is not only applicable to binary information transmission, but also applicable to multi-ary information transmission. For example, during multi-ary information transmission, to-be-transmitted information may be modulated on pixels by using a plurality of types of carriers.

Finally, apparatus embodiments in embodiments of this application are described.

To implement the functions in the method provided in this application, the first device, the second device, and the like may each include a hardware structure and/or a software module, and implement the foregoing functions in a form of a hardware structure, a software module, or a hardware structure plus a software module. Whether a function in the foregoing functions is performed by using the hardware structure, the software module, or the combination of the hardware structure and the software module depends on particular applications and design constraints of the technical solutions.

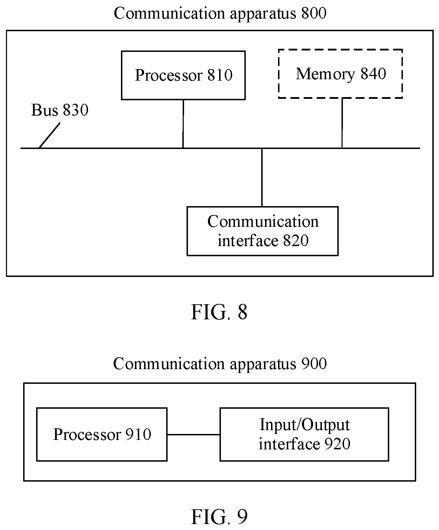

FIG. 8 is a block diagram of a communication apparatus 800 according to an embodiment of this application. The communication apparatus 800 includes a processor 810 and a communication interface 820. Optionally, the processor 810 and the communication interface 820 may be connected to each other through a bus 830. The communication apparatus 800 may be a first device, or may be a second device.

Optionally, the communication apparatus 800 may further include a memory 840. The memory 840 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 840 is configured to store related instructions and data.

The processor 810 may be one or more central processing units (central processing units, CPUs). When the processor 810 is one CPU, the CPU may be a single-core CPU, or may be a multi-core CPU.

When the communication apparatus 800 is a first device, for example, the communication apparatus 800 is configured to perform the following operations: concurrently generating a first layer and a second layer, and the like.

When the communication apparatus 800 is a second device, for example, the communication apparatus 800 is configured to perform the following operations: scanning a screen of the first device, and the like.

The content is merely used as an example for description. When the communication apparatus 800 is the first device/second device, the communication apparatus 800 is responsible for performing the methods or steps related to the first device/second device in the foregoing method embodiments.

The foregoing descriptions are merely examples. For specific content, refer to content shown in the method embodiments. For an implementation of the operations in FIG. 8, refer to the corresponding descriptions of the method embodiments shown in FIG. 2 to FIG. 7.

FIG. 9 is a block diagram of a communication apparatus 900 according to an embodiment of this application. The communication apparatus 900 is configured to implement functions of a first device/second device. The communication apparatus 900 may be a chip in the first device/second device.

The communication apparatus 900 includes an input/output interface 920 and a processor 910. The input/output interface 920 may be an input/output circuit. The processor 910 may be a signal processor, a chip, or another integrated circuit that can implement the method in this application. The input/output interface 920 is configured to input or output a signal or data.

For example, when the communication apparatus 900 is the first device, the processor 910 is configured to concurrently generate a first layer and a second layer.

For example, when the communication apparatus 900 is the second device, the input/output interface 920 is configured to scan a screen of the first device, and the processor 910 is configured to obtain second information based on a scanning result.

In a possible implementation, the processor 910 executes instructions stored in a memory, to implement functions implemented by the first device or the second device.

Optionally, the communication apparatus 900 further includes the memory.

Optionally, the processor and the memory are integrated together.

Optionally, the memory is outside the communication apparatus 900.

In a possible implementation, the processor 910 may be a logic circuit, and the processor 910 inputs/outputs a message or signaling through the input/output interface 920. The logic circuit may be a signal processor, a chip, or another integrated circuit that can implement the method in embodiments of this application.

The foregoing descriptions of the communication apparatus 900 are merely an example for description. The communication apparatus 900 can be configured to perform the method in the foregoing embodiments. For specific content, refer to the descriptions of the foregoing method embodiment. Details are not described herein again.

This application further provides a chip. The chip includes a processor, configured to invoke instructions from a memory and run the instructions stored in the memory, to cause a communication device on which the chip is installed to perform the methods in the foregoing examples.

This application further provides a chip. The chip includes an input interface, an output interface, and a processor. The input interface, the output interface, and the processor are connected through an internal connection path. The processor is configured to execute code in a memory; and when the code is executed, the processor is configured to perform the methods in the foregoing examples. Optionally, the chip further includes the memory. The memory is configured to store a computer program or the code.

This application further provides a processor, configured to be coupled to a memory, and configured to perform the method and the function of the first device or the second device in any one of the foregoing embodiments.

This application provides a computer program product including instructions. When the computer program product runs on a computer, the method in the foregoing embodiments is implemented.

This application further provides a computer program. When the computer program is run on a computer, the method in the foregoing embodiments is implemented.

This application further provides a computer-readable storage medium. The computer-readable storage medium stores a computer program. When the computer program is executed by a computer, the method in the foregoing embodiments is implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, the disclosed system, apparatus, and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the technical solutions of embodiments of this application.

In addition, functional units in embodiments of this application may be integrated into one processing unit, or each unit may exist alone physically, or two or more units may be integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A device interconnection method, wherein the method comprises:
concurrently generating, by a first device, a first layer and a second layer, wherein the first layer is a background layer, the second layer comprises N pixels, first information is modulated on the N pixels, and the first information is used for authentication and connection between the first device and a second device;
generating, by the first device, a third layer based on the first layer and the second layer; and
displaying, by the first device, the third layer on a screen.

2. The method according to claim 1, wherein the first information comprises at least two types of signals;
that the first information is modulated on the N pixels comprises: the first information is modulated on the N pixels by using at least two types of carriers; and
the at least two types of signals are in a one-to-one correspondence with the at least two types of carriers.

3. The method according to claim 1 or 2, wherein the method further comprises:
selecting, by the first device, P areas from the second layer; and
selecting, by the first device, some or all pixels from each of the P areas, wherein a total of the N pixels are selected, and
N is greater than P, and both N and P are positive integers.

4. The method according to claim 3, wherein all pixels selected from one of the P areas are used to modulate one type of signal in the first information, and the method further comprises:
repeatedly modulating, by the first device, the at least two types of signals on the pixels selected from the P areas.

5. The method according to any one of claims 2 to 4, wherein a first type of signal in the at least two types of signals corresponds to a first type of carrier in the at least two types of carriers, and the method further comprises:
modulating, by the first device, the first type of signal to M pixels in the N pixels by using the first type of carrier, wherein initial phases of the first type of carrier corresponding to the M pixels are randomly distributed.

6. The method according to claim 5, wherein the M pixels are located in S areas of the P areas, and the method further comprises:
allocating, by the first device, an R value, a G value, and a B value of RGB color space to each of the M pixels, wherein a luminance indicated by an R value, a G value, and a B value of pixels selected from each of the S areas is an L value, and a maximum difference between L values of all of the S areas is less than a first threshold.

7. The method according to any one of claims 1 to 6, wherein the method further comprises:
selecting, by the first device, one or more first pixels/first pixel blocks of the second layer; and
modulating, by the first device, a carrier corresponding to the one or more first pixels/first pixel blocks to a constant carrier in a process of transmitting the first information.

8. The method according to any one of claims 2 to 7, wherein a frequency of any one type of carrier in the at least two types of carriers is 0.

9. A device interconnection method, wherein the method comprises:
scanning, by a second device, a screen of a first device, wherein a third layer is displayed on the screen, the third layer is generated based on a first layer and a second layer, the first layer and the second layer are concurrently generated, the first layer is a background layer, the second layer comprises N pixels, first information is modulated on the N pixels, and the first information is used for authentication and connection between the second device and the first device;
obtaining, by the second device, second information based on a scanning result; and
authenticating, by the second device, the second information and completing the connection to the first device.

10. The method according to claim 9, wherein the first information comprises at least two types of signals; that the first information is modulated on the N pixels comprises: the first information is modulated on the N pixels by using at least two types of carriers; and
the at least two types of signals are in a one-to-one correspondence with the at least two types of carriers.

11. The method according to claim 9 or 10, wherein the N pixels are obtained by selecting some or all pixels from each of P areas selected from the second layer of the first device, wherein
N is greater than P, and both N and P are positive integers.

12. The method according to claim 11, wherein all pixels selected from one of the P areas are used to modulate one type of signal in the first information; and
when a sampling rate at which the second device scans the screen of the first device is equal to a screen refresh rate of the first device, the at least two types of signals are repeatedly modulated on the pixels selected from the P areas.

13. The method according to claim 9 or 10, wherein a sampling rate at which the second device scans the screen of the first device is greater than or equal to twice a screen refresh rate of the first device.

14. The method according to any one of claims 9 to 13, wherein a frequency of any one type of carrier in the at least two types of carriers is 0.

15. A communication apparatus, comprising a processor, wherein the processor is configured to execute a computer program or instructions,
to enable the communication apparatus to perform the method according to any one of claims 1 to 8, or enable the communication apparatus to perform the method according to any one of claims 9 to 14.

16. The communication apparatus according to claim 15, wherein the communication apparatus further comprises a memory, and the memory is configured to store the computer program or the instructions.

17. The communication apparatus according to claim 15, wherein the communication apparatus further comprises a communication interface, and the communication interface is configured to input a signal and/or output a signal.

18. A computer-readable storage medium, wherein the computer-readable storage medium stores a computer program or instructions, and when the computer program or the instructions are run on a computer,
the method according to any one of claims 1 to 8 is performed, or the method according to any one of claims 9 to 14 is performed.

19. A computer program product, comprising instructions, wherein when the instructions are run on a computer,
the method according to any one of claims 1 to 8 is performed, or the method according to any one of claims 9 to 14 is performed.
